# EUROPÄISCHE PATENTSCHRIFT

(11) **EP 2 677 898 B1**
(45) Veröffentlichungstag und Bekanntmachung des Hinweises auf die Patenterteilung: **14.10.2015**
(21) Anmeldenummer: 12707977.0
(22) Anmeldetag: 17.02.2012
(51) Int. Cl.: F16B 9/02, F16B 1/00, A47F 5/08, A47B 96/06

(54) **VORRICHTUNG ZUM LÖSBAREN BEFESTIGEN EINES ELEMENTS AN EINER WAND OD. DGL.**
DEVICE FOR RELEASABLY FASTENING AN ELEMENT TO A WALL OR THE LIKE
DISPOSITIF DE FIXATION AMOVIBLE D'UN ÉLÉMENT SUR UNE PAROI OU SIMILAIRE

(30) Priorität: 23.02.2011 DE 102011012206
(43) Veröffentlichungstag der Anmeldung: 01.01.2014
(73) Patentinhaber: Dula-Werke Dustmann & Co. GmbH, 44225 Dortmund (DE)
(72) Erfinder: DUSTMANN, Heinz-Herbert, 44227 Dortmund (DE); MEIS, Alfons, 46286 Dorsten (DE); HOHEISEL, Stefan, 44319 Dortmund (DE)
(74) Vertreter: Buse, Mentzel, Ludewig Patentanwaltskanzlei
(86) Internationale Anmeldenummer: PCT/EP2012/000711
(87) Internationale Veröffentlichungsnummer: WO 2012/113528

(56) Entgegenhaltungen:
- EP-A1- 0 683 998
- WO-A1-03/079852
- WO-A1-2005/055774

## Beschreibung

Die Erfindung betrifft eine Vorrichtung zum lösbaren Befestigen eines Elements an einer Wand, an einem Möbelstück, einer Säule, einer Holz- bzw. Glasplatte od.dgl. mit den Merkmalen des Oberbegriffs von Anspruch 1.

Solche Vorrichtungen werden insbesondere in der Möbelindustrie, im Ladenbau, im Bereich des Innenausbaus und überall dort verwendet, wo man Elemente möglichst einfach montieren, demontieren und umdekorieren möchte.

Eine Vorrichtung der eingangs genannten Art beschreibt die DE 200 08 818 U1. Die dort beschriebene Vorrichtung dient zum lösbaren Anbringen einer Tragstange an einer Wand oder einem Regalelement. Hierzu sind eine Stangenplatte und eine Knopfplatte vorgesehen, welche miteinander in Wirkverbindung bringbar sind. Die Knopfplatte weist dabei eine Einschnürung auf, welche Gegenkupplungsmittel für die Kupplungsmittel der Stangenplatte bildet. Nachteilig bei dieser Anordnung ist es, wenn die Tragstange elektrisch betreibbare Bauteile, wie beispielsweise Beleuchtungen, Lautsprecher oder Anzeigenelemente aufweist. Sofern diese nicht über Batterien oder Akkumulatoren betrieben werden, müssen immer noch elektrische Anschlüsse verlegt werden, beispielsweise über Kabel oder Stecker. Dies ist zeitaufwendig und von einer mit elektrischen Anschlüssen ungeübten Bedienperson nicht einfach zu bewerkstelligen.

Das Dokument WO 2005/055774 A1 beschreibt eine Vorrichtung, an der Gegenstände halterbar sind. Hierzu ist eine Einstecköffnung vorgesehen, in welche ein Steckteil einsteckbar ist. In diesem Fall ist es jedoch notwendig, eine gewisse Tiefe der Einstecköffnung und damit auch der Wand oder Vorrichtung, an der die Einstecköffnung angebracht wird, vorzusehen. Bei einfachen Paneelen erstreckt sich die Einstecköffnung somit noch deutlich hinter dem Paneel, so dass sie bei freistehenden Paneelen nur schwer anwendbar ist. Der elektrische Kontakt zum Verbraucher entsteht bei vollständig eingestecktem Steckteil. Darüber hinaus weist die Einstecköffnung, wenn kein Steckteil eingebracht wird, kein besonders ansprechendes Äußeres aus, was insbesondere in Ladengeschäften und ähnlichen Verkaufsflächen zu vermeiden ist.

Aufgabe der Erfindung ist es daher, eine Vorrichtung der eingangs genannten Art dahingehend zu verbessern, dass eine einfache Montage und Demontage des Elementes möglich ist, auch wenn am Element ein oder mehrere elektrisch betreibbare Bauteile vorgesehen sind und eine Vorrichtung zu schaffen, die mit einer geringen Einbautiefe auskommt. Diese Aufgabe wird erfindungsgemäß durch die kennzeichnenden Merkmale von Anspruch 1 gelöst, denen folgende besondere Bedeutung zukommt.

An der Knopfplatte existieren elektrische Anschlussstellen, welche sich insbesondere im Bereich der Einschnürung befinden und die mit einer Spannungsquelle, wie beispielsweise den üblichen in einem Gebäude befindlichen Stromleitungen verbindbar sind. Die Stangenplatte wiederum weist elektrische Gegenanschlussstellen auf. Über diese sind ein oder mehrere elektrisch betreibbare Bauteile anschließbar, wodurch sie mit der Spannungsquelle elektrisch kontaktwirksam verbunden werden. Die elektrischen Anschlussstellen sowie die elektrischen Gegenanschlussstellen sind so angeordnet, dass im Kupplungsfall diese automatisch miteinander in elektrisch kontaktwirksame Lage gebracht werden, so dass elektrische Energie über die Anschlussstellen und Gegenanschlussstellen übertragen werden kann und so die elektrisch betreibbaren Bauteile mit der entsprechenden elektrischen Energie versorgt werden können. Dies bildet eine sehr einfache Möglichkeit, verschiedene Elemente zu montieren und zu demontieren bzw. eine mit einer oder mehreren Vorrichtungen ausgestatteten Möbelstück, Säule od.dgl. schnell und einfach umzudekorieren. Bei der Montage der Stangenplatte an der Knopfplatte treten automatisch die elektrischen Anschlussstellen und elektrischen Gegenanschlussstellen miteinander in elektrisch kontaktwirksame Lage, so dass die Stromversorgung des bzw. der elektrisch betreibbaren Bauteile automatisch erfolgt. Eine komplizierte Montage ist somit nicht notwendig. Auch kann die Montage durch Bedienpersonen vorgenommen werden, bei denen es sich nicht um Fachkräfte des Elektrobereiches handelt. Beispielsweise ist denkbar, dass in einem Ladengeschäft als Element ein Warenträger vorgesehen ist, der zu Zwecken der Umdekoration an immer anderen Positionen angeordnet werden kann, wobei dann am Warenträger befindliche Beleuchtungseinrichtungen direkt mit der notwendigen elektrischen Energie versorgt werden. Die Umdekorierung kann dann einfach vom Verkaufspersonal des Ladengeschäfts durchgeführt werden, da die elektrische Kontaktierung automatisch erfolgt.

In einem bevorzugten Ausführungsbeispiel ist als Element an der Stangenplatte eine Stange vorgesehen, die zum Aufhängen von Waren und/oder zur Halterung eines Warenträgers verwendbar ist, wobei die Stangenplatte am wandseitigem Ende der Stange angeordnet ist. Die Stange und die Stangenplatte können einstückig ausgebildet sein. Es ist jedoch auch möglich, die Stange mehrteilig auszubilden. Die Stange selber kann als Warenträger dienen. Sie kann allerdings auch einen speziellen Warenträger halten, beispielsweise einen Regalboden oder Ähnliches. Die Stangenplatte kann auch selbst das Element bilden. Ist kein weiteres Element, wie eine Stange oder Ähnliches, gewünscht, so kann entweder die Knopfplatte frei bleiben oder mit einer als Element ausgebildeten Stangenplatte versehen werden. Die Stangenplatte kann unabhängig davon, welche Art Element vorgesehen ist, an ihrer Außenseite verziert werden, um einen vorteilhaften optischen Eindruck zu erwirken.

In einem besonders bevorzugten Ausführungsbeispiel ist die Vorrichtung mit Niederspannung ausgestattet, so dass elektrisch betreibbare Bauteile mit Schwachstrom betrieben werden. Dies ist für die meisten Anwendungsgebiete ausreichend. Darüber hinaus gibt es den Vorteil, dass Verletzungen durch Stromschläge quasi ausgeschlossen werden. Es ist somit nicht notwendig, die Anschlussstellen vor Berührung zu sichern. Auch ist es vollkommen unbedenklich, wenn die Montage bzw. Demontage der Stangenplatte von einer im Umgang mit elektrischem Strom nicht geschulten Personen durchgeführt wird.

In einem weiteren bevorzugten Ausführungsbeispiel liegt die Knopfplatte im Kupplungsfall mit ihrer rückseitigen Plattenbreitseite an der Wand an. Somit ist eine gute Abstützung der Knopfplatte an der Wand gegeben; insbesondere kann auch noch ein Konterstück vorgesehen sein, welches die Knopfplatte an der Wand von der der Knopfplatte abgewandten Seite der Wand her haltert. Somit ist es möglich, auch Stangenplatten mit Elementen vorzusehen, welche ein höheres Gewicht haben, da beispielsweise eine größere Menge von Waren auf dem Element angeordnet wird.

Besonders vorteilhaft ist es, die Knopfplatte so an der Wand zu haltern, dass sie verdrehsicher gelagert ist. Ein unbeabsichtigtes Verdrehen der Knopfplatte bzw. Lösen der Stangenplatte von der Knopfplatte kann so vermieden werden.

Empfehlenswerterweise sind die elektrischen Anschlussstellen in einem Adapter angeordnet, welcher in einer Aufnahme der Knopfplatte anbringbar ist. Der Adapter besteht dabei vorzugsweise ganz oder teilweise aus Kunststoff. Durch die Verwendung eines Adapters ist es auch möglich, Vorrichtungen, welche nicht über elektrische Anschlussstellen verfügen, nachzurüsten. Außerdem kann die Knopfplatte selbst beispielsweise aus Metall gefertigt werden, um bessere Festigkeiten oder eine ansprechendere Optik zu erzielen, ohne dass es zwischen den elektrischen Anschlussstellen zu einem Kurzschluss kommen kann. Der Kunststoff, aus dem der Adapter dann besteht, ist einfach und preiswert in der Fertigung und weist die notwendigen elektrisch isolierenden Eigenschaften auf, um einen Kurzschluss zwischen den elektrischen Anschlussstellen zu vermeiden.

Eine einfache Möglichkeit, den Adapter vorzusehen, besteht darin, die elektrischen Leitungen, die zum Anschluss der elektrischen Anschlussstellen an die Spannungsquelle dienen, durch den Adapter zu führen und dann in elektrischen Kontakten zu verklemmen. Diese Kontakte können dann mittelbar oder unmittelbar die elektrischen Anschlussstellen bilden. Selbstverständlich ist es auch möglich, den Adapter um die elektrischen Leitungen herum durch Spritzgießen oder ähnliche Verfahren anzuformen. Der Adapter kann dann einfach an der Knopfplatte befestigt werden.

Weitere Vorteile und Ausführungsbeispiele ergeben sich aus der nachfolgenden Beschreibung, den Unteransprüchen und den Zeichnungen. In den Figuren ist die Erfindung in einem Ausführungsbeispiel dargestellt. Es zeigen:
- Fig. 1:: die einzelnen Bauteile einer erfindungsgemäßen Vorrichtung in Explosionsdarstellung,
- Fig. 2:: die Elemente aus Fig. 1 zusammengebaut perspektivisch von hinten,
- Fig. 3:: die Elemente aus Fig. 2 in Seitenansicht,
- Fig. 4:: die Elemente aus Fig. 3 in Rückansicht,
- Fig. 5:: die Elemente aus Fig. 1 bis 4 entlang des Schnitts B-B in Fig. 4,
- Fig. 6:: einen Ausschnitt bzgl. der elektrischen Anschlussstellen und Gegenanschlussstellen,
- Fig. 7:: die Elemente aus Fig. 4 in Draufsicht,
- Fig. 8:: die Elemente aus Fig. 7 in einem Schnitt gemäß D-D,
- Fig. 9:: eine Vergrößerung aus Fig. 8 gemäß E.

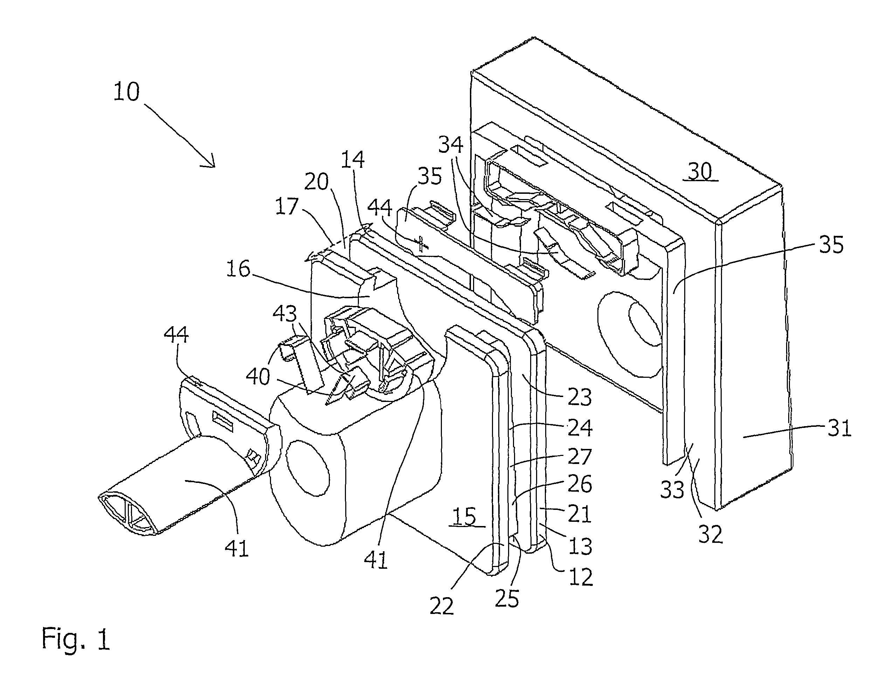

Fig. 1 zeigt ein Ausführungsbeispiel der Vorrichtung 10 in Explosionsdarstellung. Man erkennt die Knopfplatte 12, welche eine Einschnürung 20 aufweist, wodurch die Knopfplatte 12 in ein Plattenknopfstück 21 und ein Plattenfußstück 22 geteilt wird. An der Knopfplatte 12 ist ein Kupplungsknopf 13 vorgesehen, welcher als Gegenkupplungsmittel 14 zum Kupplungsmittel 33 der Stangenplatte 31 dient. Die Stangenplatte 31 ist in diesem Ausführungsbeispiel als Element 30 ausgebildet. Die Einschnürung 20 befindet sich im Plattenumriss 17 der Knopfplatte 12. Sie ist in etwa U-förmig ausgebildet und bestimmt einen trapezförmigen inneren Umriss 24. Die Form dieses inneren Umrisses 24 wird später noch näher gezeigt werden.

Des Weiteren ist ein Adapter 41 erkennbar, an welchem die elektrischen Anschlussstellen 40 anordbar sind. Die elektrischen Anschlussstellen 40 sind hier als Kontakte 43 ausgebildet.

Der Stangenplatte 31 ist ein Einsatz 35 zugeordnet, welcher hier vorzugsweise aus Kunststoff besteht. An diesem Einsatz 35 sind die elektrischen Gegenanschlussstellen 34 angeordnet. Der Einsatz 35 ist in diesem Ausführungsbeispiel auf die Stangenplatte 31 aufclipsbar. Die elektrischen Anschlussstellen 40 und die elektrischen Gegenanschlussstellen 34 sind so angeordnet, dass sie im Kupplungsfall 11 direkt automatisch miteinander in elektrisch kontaktwirksame Lage gebracht werden.

Außerdem ist noch sowohl am Adapter 41 als auch an dem Einsatz 35 jeweils eine Markierung 44 erkennbar, welche aussagt, an welcher der beiden elektrischen Anschlussstellen 40 bzw. elektrischen Gegenanschlussstellen 34 der elektrische Pluspol vorgesehen ist. Dies gilt selbstverständlich für die Verwendung von Gleichspannung. Bei Wechselspannung kann derart beispielsweise der spannungsführende Anschluss gekennzeichnet werden (Phase).

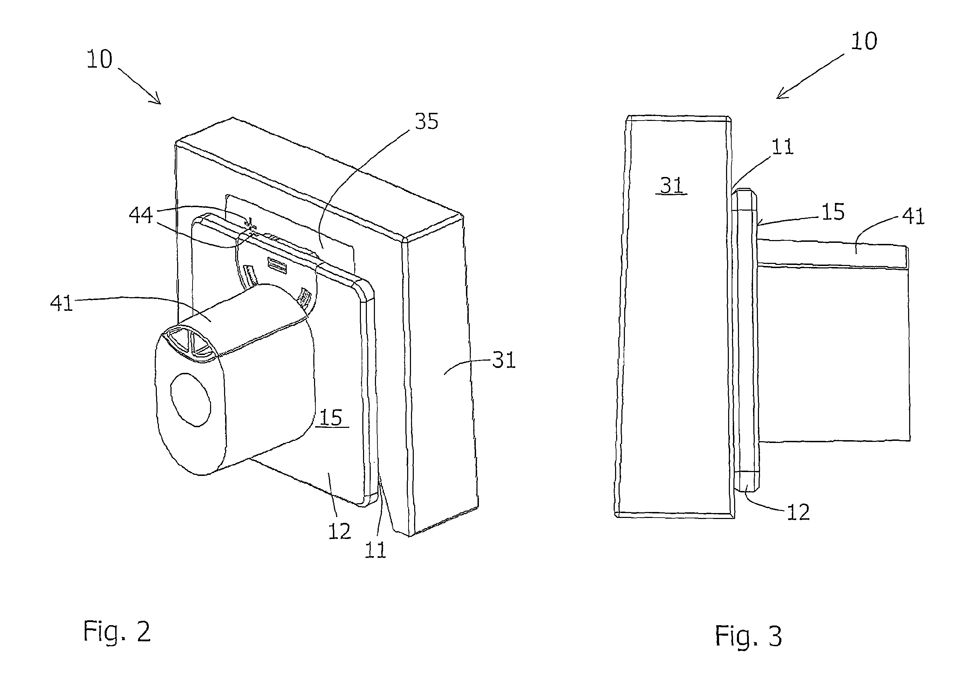

Die Fig. 2 bis 5 zeigen die Vorrichtung 10 im zusammengebauten Zustand. Man erkennt leicht, dass es sich um eine einfache und kompakte Bauweise handelt. Der Plattenumriss 17 der Knopfplatte 12 sowie der Außenumriss der Stangenplatte 31 sind hier in etwa quaderförmig gestaltet. Selbstverständlich ist es auch möglich, eine oder beide Platten 12, 31 anders geformt auszubilden, beispielsweise in Form eines Kreises, Ovals, Achtecks oder einer anderen Form. Insbesondere die Stangenplatte 31 kann äußerlich nahezu jede beliebige Form aufweisen, da es lediglich auf die innere Ausgestaltung mit den Klauen 32 ankommt, damit die Stangeplatte 31 mit der Knopfplatte 12 in die gewünschte Position gebracht werden kann.

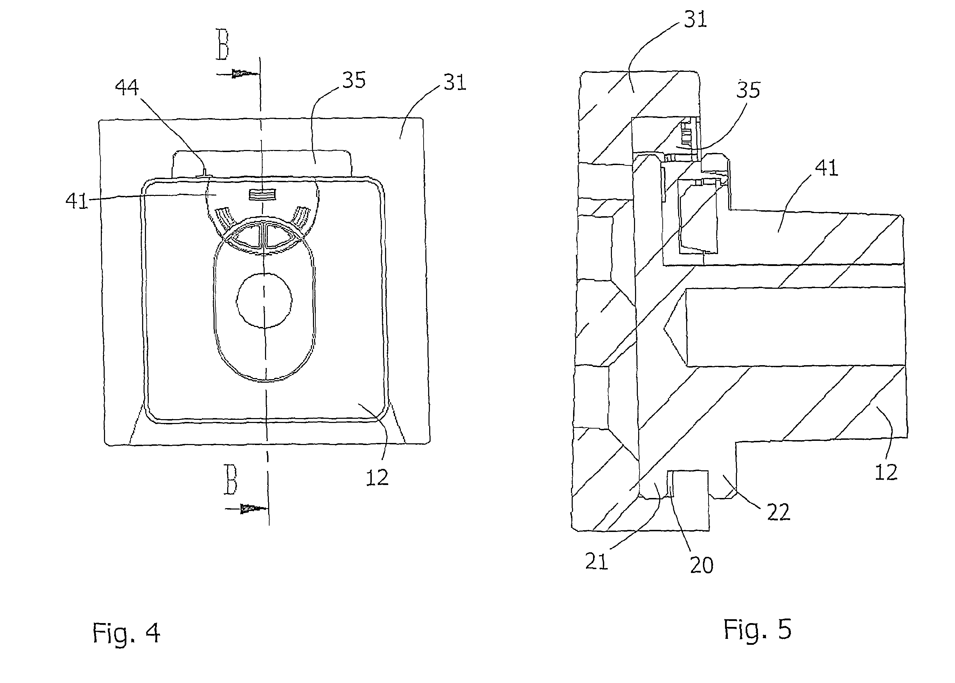

Fig. 5 zeigt wiederum die an der Knopfplatte 12 montierte Stangenplatte 31. Die in der Stangenplatte 31 gezeigten Bohrungen können dabei dazu dienen, eine Stange oder auch ein anderes Element, wie einen Warenträger oder Ähnliches, an der Stangenplatte 31 sicher zu befestigen.

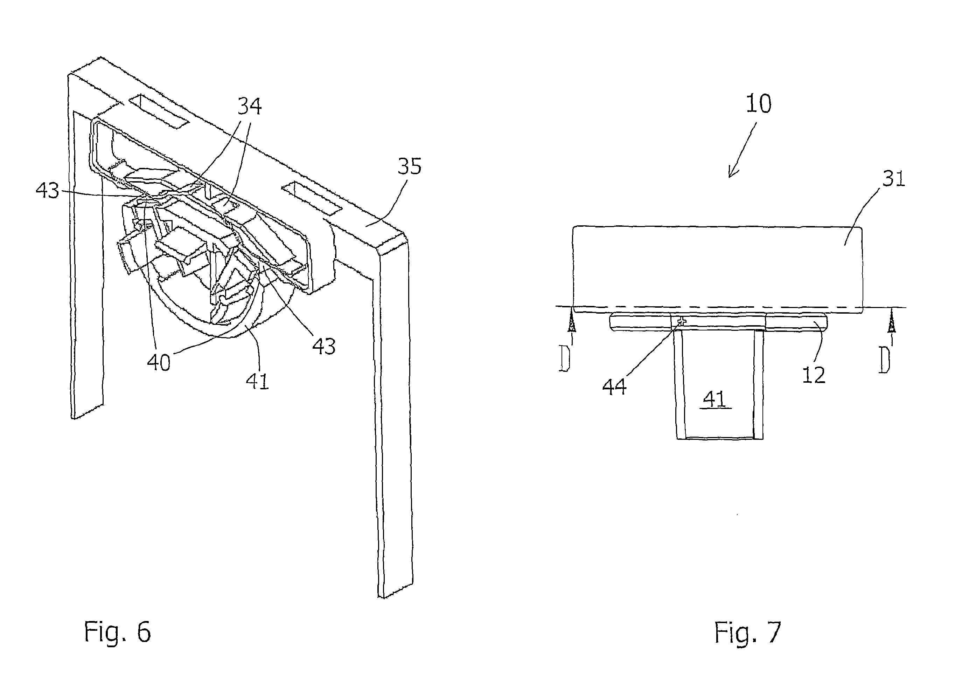

Fig. 6 zeigt das Zusammenwirken von Adapter 41 und Einsatz 35, um die elektrischen Anschlussstellen 40 mit den elektrischen Gegenanschlussstellen 34 in elektrisch kontaktwirksame Lage zu bringen. Die elektrischen Anschlussstellen 40 sind als Kontakte 43 ausgebildet, die in der in Fig. 6 gezeigten Lage automatisch gegen die elektrischen Gegenanschlussstellen 34 drücken und so den elektrischen Kontakt herstellen, über welchen die elektrisch betreibbaren Bauteile anschließbar sind.

Fig. 7 wiederum zeigt die erfindungsgemäße Vorrichtung 10 in Draufsicht. Auch im zusammengebauten Zustand ist von außen noch die Markierung 44 an der Knopfplatte 12 erkennbar, so dass ein elektrisch betreibbares Bauteil an einem Element 30, welches an die Stangenplatte 31 montiert werden soll, korrekt angebracht werden kann.

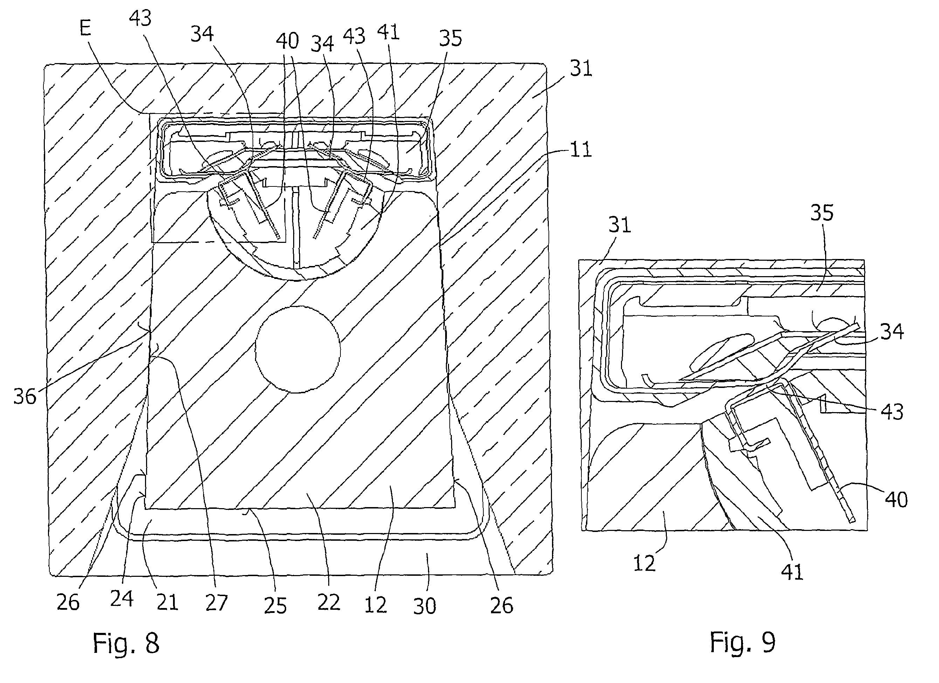

Aus den Fig. 8 und 9 wird nochmals der innere Aufbau der Vorrichtung 10 im Kupplungsfall 11 erkennbar. Man erkennt den trapezförmigen inneren Umriss 24 der Einschnürung 20 an der Knopfplatte 12. Die Trapez-Basis 25 befindet sich an der unteren Schmalseite der Knopfplatte 12, wobei die beiden Trapezschenkel 26 zwei zueinander gegensinnig geneigte Stützflächen 27 bilden. Die Klauen 32 der Stangenplatte 31 bilden ebenfalls zwei zueinander gegensinnig geneigt verlaufende Gegenstützflächen 36, welche im hier gezeigten Kupplungsfall 11 an den Stützflächen 27 zur Anlage kommen. Hierdurch ist die Montage zwischen Stangenplatte 31 und Knopfplatte 12 sehr einfach. Auch bei der Herstellung der Bauteile können gewisse Toleranzen akzeptiert werden. Trotzdem werden Knopfplatte 12 und Stangenplatte 31 sicher und fest aneinander gehaltert. Die Montage ist ohne zusätzliches Werkzeug möglich, was sie einerseits erleichtert und andererseits Montagefehler minimiert.

Man erkennt auch, dass auch hier automatisch die elektrischen Anschlussstellen 40 und die elektrischen Gegenanschlussstellen 34 in elektrisch kontaktwirksamer Lage sind. Die elektrischen Anschlussstellen 40 sind dabei als Kontakte 43 ausgebildet.

Abschließend sei noch darauf hingewiesen, dass es sich bei den hier gezeigten Darstellungen lediglich um beispielhafte Verwirklichungen der Erfindung handelt. Diese ist nicht darauf beschränkt. Es sind vielmehr noch Abänderungen und Abwandlungen möglich.

### Bezugszeichenliste:

- 10: Vorrichtung
- 11: Kupplungsfall
- 12: Knopfplatte
- 13: Kupplungsknopf
- 14: Gegenkupplungsmittel
- 15: Rückseitige Plattenbreitseite von 12
- 16: Aufnahme
- 17: Plattenumriss von 12
- 20: Einschnürung
- 21: Plattenkopfstück
- 22: Plattenfußstück
- 23: Einschnürprofil
- 24: Innerer Umriss von 20
- 25: Trapez-Basis von 24
- 26: Trapezschenkel
- 27: Stützfläche
- 30: Element
- 31: Stangenplatte
- 32: Klauen
- 33: Kupplungsmittel
- 34: Elektrische Gegenanschlussstellen
- 35: Einsatz
- 36: Gegenstützfläche
- 40: Elektrische Anschlussstellen
- 41: Adapter
- 43: Kontakt
- 44: Markierung

## Patentansprüche

1. Vorrichtung (10) zum lösbaren Befestigen eines Elements (30) an einer Wand, einem Möbelstück, einer Säule, einer Holz- bzw. Glasplatte od. dgl.,
mit einer Stangenplatte (31), die am Element (30) angeordnet ist oder dieses bildet, wobei die Stangenplatte (31) über mindestens zwei Klauen (32) verfügt, welche wenigstens ein Kupplungsmittel (33) bilden, wobei die Klauen (32) insbesondere zueinander gegenseitig geneigt ausgebildet sind,
wobei ein an der Wand befestigbarer Kupplungsknopf (13) vorgesehen ist, der eine Knopfplatte (12) und ein oder mehrere Gegenkupplungsmittel (14) aufweist, die bei der Montage mit dem oder den Kupplungsmitteln (33) des Elements (30) in Wirkverbindung bringbar sind, wobei der Plattenumriss (17) der Knopfplatte (12) wenigstens eine Einschnürung (20) aufweist, die ein Gegenkupplungsmittel (14) bildet,
wobei die Einschnürung (20) die Knopfplatte (12) in ein Plattenkopfstück (21) und ein Plattenfußstück (22) gliedert,
wobei an der Knopfplatte (12) elektrische Anschlussstellen (40) vorgesehen sind, insbesondere im Bereich der Einschnürung (20), welche mit einer Spannungsquelle verbindbar sind,
wobei die Stangenplatte (31) elektrische Gegenanschlussstellen (34) aufweist, über welche ein oder mehrere an der Stangenplatte (31) anbringbare, elektrisch betreibbare Bauteile anschließbar sind,
und wobei die elektrischen Anschlussstellen (40) und die elektrischen Gegenanschlussstellen (34) so angeordnet sind, dass im Kupplungsfall (11) diese automatisch miteinander in elektrisch kontaktwirksame Lage gebracht werden
**dadurch gekennzeichnet,**
**dass** die Einschnürung (20) ein U-förmiges Einschnürprofil (23) aufweist, und einen trapezförmigen inneren Umriss (24) bestimmt, dessen Trapez-Basis (25) sich an der unteren Schmalseite der Knopfplatte (12) befindet, wobei die beiden Trapezschenkel (26) zwei zueinander gegensinnig geneigte Stützflächen (27) bilden, wobei die Klauen (32) zwei zueinander gegensinnig geneigt verlaufende Gegenstützflächen (36) bilden, wobei im Kupplungsfall (11) die Gegenstützflächen (36) an den Stützflächen (27) zur Anlage kommen..

2. Vorrichtung nach Anspruch 1, **dadurch gekennzeichnet, dass** als Element (30) an der Stangenplatte (31) eine Stange vorgesehen ist, die zum Aufhängen von Waren und/oder zur Halterung eines Warenträgers verwendbar ist
und dass die Stangenplatte (31) an dem wandseitigen Ende der Stange angeordnet ist, wobei die Stange und die Stangenplatte (31) miteinander einstückig oder mehrteilig ausgebildet sind.

3. Vorrichtung nach einem der Ansprüche 1 oder 2, **dadurch gekennzeichnet, dass** die Knopfplatte (12) im Kupplungsfall (11) mit ihrer rückseitigen Plattenbreitseite (15) an der Wand anliegt, wobei insbesondere ein Konterstück vorgesehen ist, welches die Knopfplatte (12) an der Wand von der der Knopfplatte (12) abgewandten Seite der Wand her haltert.

4. Vorrichtung nach einem der Ansprüche 1 bis 3, **dadurch gekennzeichnet, dass** die elektrischen Anschlussstellen (40) in einem Adapter (41) angeordnet sind, welcher in einer Aufnahme (16) der Knopfplatte (12) anbringbar ist, wobei der Adapter (41) vorzugsweise ganz oder teilweise aus Kunststoff besteht.

5. Vorrichtung nach Anspruch 4, **dadurch gekennzeichnet, dass** die elektrischen Leitungen, die zum Anschluss der elektrischen Anschlussstellen (40) an die Spannungsquelle dienen, durch den Adapter (41) geführt und dort in Kontakten (43) verklemmt werden, die mittelbar oder unmittelbar die elektrischen Anschlussstellen (40) bilden.

6. Vorrichtung nach einem der Ansprüche 1 bis 5, **dadurch gekennzeichnet, dass** an der Stangenplatte (31) ein Einsatz (35), insbesondere aus Kunststoff vorgesehen ist, an welchem die elektrischen Gegenanschlussstellen (34) angeordnet sind, wobei der Einsatz (35) vorzugsweise auf die Stangenplatte (31) aufsteckbar oder anclipsbar ist.

7. Vorrichtung nach einem der Ansprüche 1 bis 6 **dadurch gekennzeichnet, dass** die Vorrichtung (10) mit Niederspannung bzw. Schwachstrom betrieben wird.

8. Vorrichtung nach einem der Ansprüche 1 bis 7, **dadurch gekennzeichnet, dass** an der Knopfplatte (12) und/oder am Adapter (41) und/oder an der Stangenplatte (31) und/oder am Einsatz (35) wenigstens eine Markierung (44) vorgesehen ist, die die Polarität der elektrischen Anschlussstellen (40) angibt.

9. Vorrichtung nach einem der Ansprüche 1 bis 8, **dadurch gekennzeichnet, dass** die Knopfplatte (12) verdrehsicher an der Wand halterbar ist.

## Claims

1. A device (10) for releasable fastening of an element (30) to a wall, a piece of furniture, a pillar, a wooden or glass panel or the like,
with a rail panel (31), onto which the element (30) is arranged, or forms this, whereby, the rail panel (31) has a minimum of two claws (32) that at least form a coupling element (33), whereby, in particular, the claws (32) are formed opposing to each other,
whereby, a coupling button (13) is provided attached to the wall that, features a button panel (12) and one or multiple counter coupling elements (14) that, during installation, are brought into effective connection with the coupling element(s) (33) of the element (30), whereby, the panel outline (17) of the button panel (12) features a minimum of one constriction (20) that forms a mating coupling element (14),
whereby, the constriction (20) of the button panel (12) is divided into a panel head piece (21) and a panel foot piece (22),
whereby, electrical connection locations (40) are provided on the button panel (12), in particular in the area of the constriction (20), which can be connected to a source of voltage,
whereby, the rail panel (31) features mating electrical connection locations (34), through which one or multiple electrically operated components can be connected to the rail panel (31),
and, whereby, the electrical connection locations (40) and mating electrical connection locations (34) are arranged so that in the event of coupling (11), these are automatically brought into effective electrical contact with one another
**characterized in that,**
the constriction (20) features a U-shaped constriction profile (23) and a specific trapezoidal internal contour (24), the trapezoid basis (25) is located on the lower narrow side of the button panel (12), whereby, both trapezoidal side (26) form two, opposing, inclined supporting areas (27), whereby, the claws (32) form two opposing, inclined supporting areas (36), whereby, in the event of coupling (11), the supporting areas (36) come to rest on the supporting areas (27).

2. A device in accordance with claim 1, **characterized in that** a rail is provided on the rail panel (31) as an element (30) that can be used to hang goods and/or for holding goods carriers
and that the rail panel (31) is arranged on the end of the rail on the wall side, whereby, the rail and rail plate (31) are formed as one piece or as multiple pieces.

3. A device in accordance with one of the claims 1 or 2, **characterized in that**, in the event of coupling (11), the button panel (12) rests with its rear panel wide side (15) on the wall, whereby, in particular, a mating piece is provided that holds the button panel (12) on the wall on the opposite side of the button panel (12).

4. A device in accordance with one of the claims 1 to 3, **characterized in that** the electrical connection locations (40) are arranged in an adapter (41) which can be attached in a receptacle (16) of the button panel (12), whereby, the adapter (41) is preferably made completely or partly from plastic.

5. A device in accordance with claim 4, **characterized in that** the electrical lines used to connect the electrical connection locations (40) to the source of voltage are routed through the adapter (41) and clamped there in contacts (43), which indirectly or indirectly forms the electrical connection locations (40).

6. A device in accordance with one of the claims 1 to 5, **characterized in that** an insertion (35), in particular made from plastic, is provided on the rail panel (31) onto which the electrical connection locations (34) are arranged, whereby, the insertion (35) is preferably snapped on or clipped on to the rail panel (31).

7. A device in accordance with one of the claims 1 to 6, **characterized in that** the device (10) is operated by low voltage or low-tension current.

8. A device in accordance with one of the claims 1 to 7, **characterized in that** a minimum of one mark (44) is provided on the button panel (12) and/or on the adapter (41) and/or on the rail panel (31) and/or on the insertion (35) which indicates the polarity of the electrical connection locations (40).

9. A device in accordance with one of the claims 1 to 8, **characterized in that** the button panel (12) is attached to the wall secured against rotating.

## Revendications

1. Dispositif (10) de fixation amovible d'un élément (30) contre une paroi, un meuble, une colonne, une plaque de bois et/ou de verre ou similaire,
comprenant une plaque de barre (31) disposée contre l'élément (30) ou formant ce dernier, sachant que la plaque de barre (31) dispose d'au moins deux griffes (32) formant au moins un moyen d'accouplement (33), sachant que les griffes (32) sont configurées en particulier inclinées en direction les unes des autres,
sachant qu'est prévu un bouton d'accouplement (13) fixable contre la paroi, qui présente une plaque bouton (12) et un ou plusieurs moyens d'accouplement antagonistes (14) qu'il est possible d'amener, lors du montage, en liaison active à l'aide du ou des moyens d'accouplement (33) de l'élément (30), sachant que le contour (17) de la plaque bouton (12) présente au moins un étranglement (20) formant un moyen d'accouplement antagoniste (14),
sachant que l'étranglement (20) organise la plaque bouton (12) en une pièce têtière (21) de plaque et une pièce de piètement (22) de plaque,
sachant que sur la plaque bouton (12) sont prévus des points de branchement électrique (40), en particulier dans la zone de l'étranglement (20), qu'il est possible de raccorder à une source d'électricité,
sachant que la plaque de barre (31) présente des points de branchement électrique antagonistes (34) via lesquels il est possible de raccorder contre la plaque de barre (31) un ou plusieurs composants fonctionnant á l'électricité,
et sachant que les points de branchement électrique (40) et les points de branchement électrique antagonistes (34) sont disposés de telle manière qu'en cas d'accouplement (11), ils sont automatiquement rapprochés jusque sur une position permettant un contact électrique efficace,
**caractérisé en ce que**
l'étranglement (20) présente un profil d'étranglement (23) en U et définit un contour intérieur (24) de forme trapézoïdale dont la base (25) du trapèze se trouve contre le côté inférieur étroit de la plaque bouton (12), sachant que les deux côtés (26) du trapèze forment deux surfaces d'appui (27) inclinées en direction l'une de l'autre, sachant que les griffes (32) forment deux surfaces d'appui antagonistes (36) au tracé incliné en sens contraire en direction l'une de l'autre, sachant qu'en cas d'accouplement (11) les surfaces d'appui antagonistes (36) viennent appliquer contre les surfaces d'appui (27).

2. Dispositif selon la revendication 1, **caractérisé en ce qu'**est prévue, comme élément (30) contre la plaque de barre (31), une barre servant à suspendre des marchandises et/ou à retenir un support de marchandises
et **en ce que** la plaque de barre (31) est disposée contre l'extrémité de la barre côté paroi, sachant que la barre et la plaque de barre (31) sont configurées soit unies monobloc soit divisées en plusieurs parties.

3. Dispositif selon l'une des revendications 1 ou 2, **caractérisé en ce qu'**en cas d'accouplement (11) la plaque bouton (12) applique par le côté large (15) de son dos contre la paroi, sachant qu'en particulier une pièce antagoniste est prévue qui retient la plaque bouton (12) contre la paroi, depuis le côté de la paroi ne regardant pas la plaque bouton (12).

4. Dispositif selon l'une des revendications 1 à 3, **caractérisé en ce que** les points de branchement électrique (40) sont disposés dans un adaptateur (41) qu'il est possible de fixer dans un réceptacle (16) de la plaque bouton (12), sachant que l'adaptateur (41) se compose de préférence intégralement ou en partie de matière plastique.

5. Dispositif selon la revendication 4, **caractérisé en ce que** les lignes électriques qui servent à raccorder les points de branchement électrique (40) à la source de tension traversent l'adaptateur (41) et sont bridées là dans des contacts (43) formant indirectement ou directement les points de branchement électrique (40).

6. Dispositif selon l'une des revendications 1 à 5, **caractérisé en ce qu'**est prévu contre la plaque de barre (31) un insert (35), en particulier en matière plastique, contre lequel sont disposés les points de branchement électrique antagonistes (34), sachant que l'insert (35) peut être de préférence enfiché ou clipsé sur la plaque de barre (31).

7. Dispositif selon l'une des revendications 1 à 6, **caractérisé en ce que** le dispositif (10) fonctionne sur basse tension et sous courant faible.

8. Dispositif selon l'une des revendications 1 à 7, **caractérisé en ce que** contre la plaque bouton (12) et/ou contre l'adaptateur (41) et/ou contre la plaque de barre (31) et/ou contre l'insert (35) est prévu au moins un marquage (44) indiquant la polarité des points de branchement électrique (40).

9. Dispositif selon l'une des revendications 1 à 8, **caractérisé en ce que** la plaque bouton (12) peut être fixée contre la paroi de façon à ce qu'elle ne puisse pas tourner.
